# EUROPEAN PATENT APPLICATION

(11) **EP 4 435 877 A1**
(43) Date of publication of application: **25.09.2024**
(21) Application number: 23799697.0
(22) Date of filing: 04.05.2023
(51) Int. Cl.: H01M 4/04, F26B 21/00, F26B 21/08, F26B 25/06

(54) **ELECTRODE DRYING APPARATUS**

(30) Priority: 04.05.2022 KR 20220055134
(71) Applicant: LG Energy Solution, Ltd., Seoul 07335 (KR)
(72) Inventor: KIM, Tae Yeon, Daejeon 34122 (KR); LEE, Doo Hyun, Daejeon 34122 (KR); SON, Jae Huoung, Daejeon 34122 (KR); AHN, Chang Bum, Daejeon 34122 (KR)
(74) Representative: Plasseraud IP
(86) International application number: PCT/KR2023/006099
(87) International publication number: WO 2023/214816

(57) **Abstract**

The present invention relates to an electrode drying device and an electrode drying method using the same, and more particularly, relates to an electrode drying device and a drying method capable of performing uniform drying and capable of preventing crack occurrences in a coated active material.

According to one example of the present invention, it is possible to provide an electrode drying device comprising an air supply fan provided to supply air through an air supply duct to a drying space in which an electrode coated with a coating liquid on a current collector is dried; an exhaust fan provided to exhaust air from the drying space through an exhaust duct; a recovery duct supplying the air discharged from the exhaust fan to the air supply fan; a recovery damper adjusting the amount of the air introduced into the recovery duct; a main hygrometer sensing the absolute humidity of the air supplied to the drying space; and a control part adjusting an opening degree of the recovery damper according to the absolute humidity sensed by the main hygrometer in order to adjust the absolute humidity of the air introduced into the drying space.

## Description

### Technical Field

The present invention relates to an electrode drying device and an electrode drying method using the same, and more particularly, relates to an electrode drying device and drying method which can perform uniform drying and prevent crack occurrences in a coated active material.

### Background Art

Batteries that store electrical energy can be generally classified into primary batteries and secondary batteries. The primary battery is a disposable consumable battery, whereas the secondary battery is a rechargeable battery manufactured using a material capable of repeating oxidation and reduction processes between an electric current and a material. That is, when a reduction reaction is performed on the material by the electric current, the power is charged, and when an oxidation reaction is performed on the material, the power is discharged, where such charge-discharge can be repeatedly performed.

Among various types of secondary batteries, a lithium secondary battery may be manufactured through a process of coating a current collector with a negative electrode slurry in which a negative electrode active material, a conductive material, a binder, and a solvent are mixed, and drying it, in order to manufacture a negative electrode.

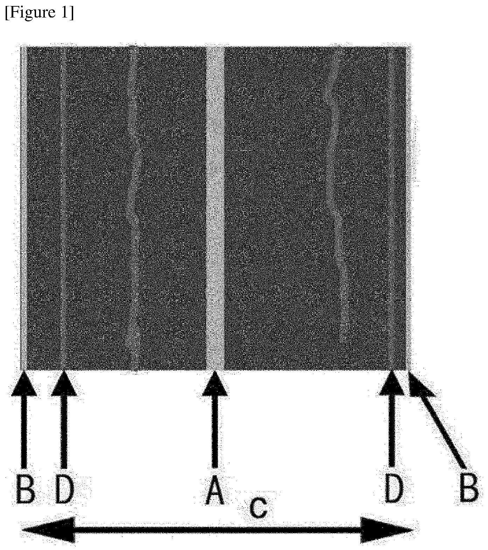

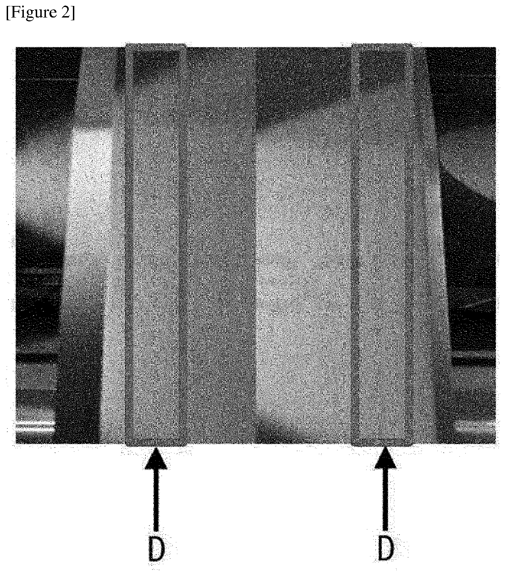

Conventionally, the drying was performed by putting the coating layer coated with the negative electrode slurry into a general oven. However, as shown in Figures 1 and 2, a sliding section in the form of a slope is generated on the side surface portion due to the flow of liquid, and thus the drying speed increases toward the side surfaces (B) with a relatively small loading amount of the negative electrode slurry based on the center portion (A) of the coating layer, so that a drying deviation in the width direction (C) of the electrode occurs due to over-drying, and as a result, there has been a problem that cracks (D) occur on the electrode surface.

In order to improve such a surface crack problem and side rings of the side surface portion due to over-drying, conventionally, various efforts, such as varying the heat quantity applied to the drying space depending on the location, have been continued.

However, it is difficult to perform an efficient and stable drying process, because the problem of surface cracks and the like is not significantly improved even by adjusting the heat quantity in the drying process, and the drying process takes more time.

Therefore, the electrode drying device and method capable of performing efficient and stable electrode drying for solving such a problem are required.

### Disclosure

### Technical Problem

The present invention is intended to solve the problem of the conventional electrode drying device and drying method.

According to one example of the present invention, it is intended to provide a device and a method capable of effectively and efficiently drying an electrode while using conventional electrode drying devices and methods without significant changes.

According to one example of the present invention, it is intended to provide a device and a method capable of effectively preventing cracks and side rings on the surface of an electrode by reducing the drying deviation in the width direction.

According to one example of the present invention, it is intended to provide a drying device capable of providing a required absolute humidity environment step by step easily and effectively using a plurality of hygrometers and dampers, and a method thereof.

### Technical Solution

In order to achieve the above-described objects, according to one example of the present invention, it is possible to provide an electrode drying device comprising an air supply fan provided to supply air through an air supply duct to a drying space in which an electrode coated with a coating liquid on a current collector is dried; an exhaust fan provided to exhaust air from the drying space through an exhaust duct; a recovery duct supplying the air discharged from the exhaust fan to the air supply fan; a recovery damper adjusting the amount of the air introduced into the recovery duct; a main hygrometer sensing the absolute humidity of the air supplied to the drying space; and a control part adjusting an opening degree of the recovery damper according to the absolute humidity sensed by the main hygrometer in order to adjust the absolute humidity of the air introduced into the drying space.

At the beginning of the drying process, most of the heat quantity may be used to heat the drying space and electrodes, and after the middle period of the drying process, most of the heat quantity may be used to evaporate the solvent. Therefore, the absolute humidity of the air discharged from the drying space is low at the beginning of the drying process, and the absolute humidity of the air discharged from the drying space is high in the middle period and latter period of the drying process.

In the present example, it is characterized in that the drying is performed in a constant absolute humidity environment. Then, the required amount of the absolute humidity is characterized by using the moisture discharged from the drying space.

Therefore, according to the present example, the opening rate of the recovery damper may be low at the beginning of the drying process, and the opening rate of the recovery damper may increase as the drying process proceeds in the middle period and latter period.

The exhaust duct may comprise a first exhaust duct connecting the drying space and the exhaust fan, and a second exhaust duct connecting the exhaust fan and an external exhaust port.

The air supply duct may comprise a first air supply duct connecting an external air supply port and the air supply fan, and a second air supply duct connecting the air supply fan and the drying space.

Preferably, the recovery duct is branched from the second exhaust duct to be connected to the first air supply duct.

Preferably, an exhaust damper adjusting the amount of the air exhausted to the external exhaust port is provided in the second exhaust duct. Then, the exhaust damper is preferably provided at the rear end of the branch point of the recovery duct.

Preferably, a recovery hygrometer sensing the absolute humidity of the air introduced into the first air supply duct through the recovery duct is provided in the recovery duct.

Preferably, the control part adjusts an opening degree of the recovery damper according to the absolute humidity sensed by the recovery hygrometer.

Preferably, the control part adjusts the opening degree of the exhaust damper to decrease as the opening degree of the recovery damper increases.

Preferably, an air supply damper adjusting the amount of the air introduced from the external air supply port is provided in the first air supply duct.

Preferably, the air supply damper is provided at the front end of the junction point of the recovery duct.

Preferably, an air supply hygrometer sensing the absolute humidity of the air introduced from the recovery duct and the external air supply port is provided in the first air supply duct.

Preferably, the control part adjusts opening degrees of the recovery damper and the air supply damper according to the absolute humidity sensed by the air supply hygrometer.

At the beginning of drying, the absolute humidity of the outside air may be higher than the absolute humidity of the return air. Therefore, preferably, at the beginning of drying, the opening degrees of the dampers are adjusted based on the absolute humidity sensed by the air supply hygrometer. Particularly, as the opening rate of the air supply damper is controlled to be higher than the opening rate of the recovery damper, consequently, the absolute humidity sensed by the main hygrometer may be increased. Preferably, it is controlled that as the opening of the recovery damper increases, the opening of the exhaust damper is conversely lowered.

After the middle period of drying, the absolute humidity of the return air may be higher than the absolute humidity of the outside air. Therefore, preferably, after the middle period of drying, the opening degrees of the dampers are adjusted based on the absolute humidity sensed by the recovery hygrometer. Particularly, as the opening rate of the recovery damper is controlled to be higher than the opening rate of the air supply damper, consequently, the absolute humidity sensed by the main hygrometer may be increased. Preferably, it is controlled that as the opening of the recovery damper increases, the opening of the exhaust damper is conversely lowered.

The over-drying may occur intensively after the middle period of drying, especially at the end of drying. Therefore, it is preferable to properly maintain the absolute humidity at the end of drying. Therefore, at the end of drying, it is preferable to adjust the opening degrees of the dampers based on the absolute humidity sensed by the main hygrometer. Particularly, it is preferable to control the drying to be completed in an optimal absolute humidity environment by controlling the opening rate of the recovery damper to be higher than the opening rate of the air supply damper.

A humidifier may be provided in the recovery duct. When the coating thickness of the active material is thick, that is, in an electrode having a large loading amount, the required absolute humidity may be further increased. In this case, it may be difficult to create a sufficient absolute humidity environment only with the recovery of moisture. That is, even in a state where the recovery damper is 100% open, and the exhaust damper and the air supply damper are completely closed, it may be difficult to create the sufficient absolute humidity environment. In this case, for additional humidification of the recovered air, the humidifier may be provided and driven. That is, the control part may additionally drive the humidifier based on the absolute humidity sensed by the main hygrometer.

Preferably, the control part controls the humidification to be performed through the humidifier when the absolute humidity sensed by the main hygrometer is lower than a predetermined value.

Meanwhile, in the drying device, the drying efficiency may be important. That is, it is preferable to reduce the heat quantity to be wasted. The temperature of air causes fluctuations in relative humidity, but is independent of the absolute humidity. Therefore, in this example, preferably, a heat exchanger, in which heat exchange between the air introduced from the second air supply duct and the air discharged from the first exhaust duct is performed, is provided. The waste of the heat quantity may be reduced by providing the introduced air with the heat quantity in the discharged air.

The electrode drying device and method according to the present example are very suitable for the drying device and method of the negative electrode coated with the negative electrode slurry. The coating liquid is a negative electrode slurry comprising a negative electrode active material, a conductive material, a binder, and a solvent, which preferably has a solid content of 50% to 70%. In this environment, it is possible to significantly reduce crack occurrences and side ring occurrences.

In order to achieve the above-described objects, according to one example of the present invention, it is possible to provide An electrode drying device comprising: an air supply fan provided to supply air through an air supply duct to a drying space in which an electrode coated with a coating liquid on a current collector is dried; an exhaust fan provided to exhaust air from the drying space through an exhaust duct; a recovery duct supplying the air discharged from the exhaust fan to the air supply fan; a recovery damper adjusting the amount of the air introduced into the recovery duct; an exhaust damper adjusting the amount of the air exhausted to an external exhaust port through the exhaust duct; an air supply damper adjusting the amount of the air introduced from an external air supply port through the air supply duct; a main hygrometer sensing the absolute humidity of the air supplied to the drying space; a recovery hygrometer sensing the absolute humidity of the air introduced into the recovery duct; an air supply hygrometer sensing the absolute humidity of the air introduced from the recovery duct and the external air supply port; and a control part adjusting an opening degree of the recovery damper according to the absolute humidity sensed by the main hygrometer in order to adjust the absolute humidity of the air introduced into the drying space.

The control part may control the amount of the recovered air through multiple steps in the drying process. In particular, through this control, it is possible to effectively control the absolute humidity in the air supplied to the drying space.

The control part may perform a first step damper control or first step humidity control adjusting the opening degrees of the air supply damper, the exhaust damper, and the recovery damper according to the absolute humidity sensed by the air supply hygrometer, a second step damper control or second step humidity control adjusting the opening degrees of the air supply damper, the exhaust damper, and the recovery damper according to the absolute humidity sensed by the recovery hygrometer, and a third step damper control or third step humidity control adjusting the opening degrees of the air supply damper, the exhaust damper, and the recovery damper according to the absolute humidity sensed by the main hygrometer sequentially.

Meanwhile, the drying process of the electrode is continuously performed. That is, the electrode roll introduced into the roll-to-roll is continuously advanced. That is, the electrode is continuously put into the drying space, dried while moving in the drying space, and then continuously discharged from the drying space.

Therefore, the initial stage of the drying process may be referred to as a preparation process for drying through the drying device. That is, it may be referred to as a step of preparing a drying environment to match the finally predetermined absolute humidity environment. Therefore, the first step and second step controls may be referred to as processes to match the absolute humidity environment, and the third step control may be referred to as a process for finally performing drying in the absolute humidity environment.

The third step damper control or humidity control is performed, and then an electrode drying process is performed in earnest, where the drying process may be continuously performed. That is, the drying process may be performed in a roll-to-roll environment, where the third step damper control may be continuously and repeatedly performed in the form of a feedback control based on the absolute humidity sensed by the main hygrometer.

The control part may perform a humidification control controlling operation of the humidifier provided in the recovery duct after the third step damper control. The required absolute humidity may be increased in consideration of a recent trend in which the loading amount of the active material in the negative electrode is increased. Therefore, the humidification control may be repeatedly performed after the third step damper control. The humidification control may be intermittently performed according to a sensing result of the main hygrometer. That is, after the humidification control, the third step damper control may be performed again, and hereinafter, if necessary, the humidification control may be performed again.

According to this example, it is confirmed that the absolute humidity factor affects an absolute influence on the electrode drying, and thus it is possible to provide a drying device capable of providing a required absolute humidity environment very easily.

### Advantageous Effects

According to one example of the present invention, it is possible to provide a device capable of effectively and efficiently drying an electrode, and a method thereof while using conventional electrode drying devices and methods without any significant change.

According to one example of the present invention, it is possible to provide a device capable of effectively preventing crack occurrences and side ring occurrences on the electrode surface by reducing drying deviation in the width direction, and a method thereof.

According to one example of the present invention, it is possible to provide a drying device capable of providing a required absolute humidity environment step by step easily and effectively using a plurality of hygrometers and dampers, and a method thereof.

According to one example of the present invention, uniform heating is possible regardless of a location in a drying space, so that it is possible to provide a drying device having a simple structure of a drying oven.

### Description of Drawings

Figure 1 is a photograph taken of the entire coating layer of an electrode dried using a conventional drying device.
Figure 2 is a photograph taken of both sides of the coating layer of the electrode dried using a conventional drying device, respectively.
Figure 3 is a diagram exemplarily showing an electrode drying device according to one example of the present invention.
Figure 4 is a control configuration diagram of an electrode drying device according to one example of the present invention.
Figure 5 is a control flowchart of an electrode drying device according to an embodiment of the present invention.
Figure 6 is a diagram exemplarily showing the inside of a heat exchanger according to one example of the present application.

### Best Mode

Hereinafter, the electrode drying device of the present application will be described with reference to the accompanying drawings, where the accompanying drawings are exemplary, and the electrode drying device of the present application is not limited to the accompanying drawings.

The present inventors can have confirmed that the absolute humidity is a factor that has an absolute influence on the improvement of surface cracks upon drying the electrode and side rings due to over-drying. That is, they can have confirmed that surface cracks and side rings are absolutely reduced when the drying is performed in a drying environment with an appropriate absolute humidity during the drying process.

However, the conventional electrode drying device exhausts the air discharged from the drying oven, so that it is not easy to provide an appropriate absolute humidity in the drying process. Therefore, it may be considered to supply air to the drying oven by humidifying the air supplied to the drying oven. That is, efforts were made to provide an appropriate absolute humidity by installing a humidifier in an outdoor air supply part.

In an electrode drying device using a humidifier, it is not easy to control the humidifier, and it is not easy to add a humidifier to the current drying device because the capacity of the humidifier increases to provide the required moisture amount. That is, a good drying effect can be expected by using a humidifier experimentally, but there are practical difficulties in adding a humidifier in the field.

Accordingly, the present inventors have noted that as the primary means for providing an appropriate absolute humidity amount, humidification through exhaust air is possible rather than humidification by a humidifier. This is because the air used in the drying process is air humidified by evaporating the solvent from the active material. That is, it has been confirmed that the required absolute humidity can be provided by actively using the humidified air as the air supply without exhausting it as it is.

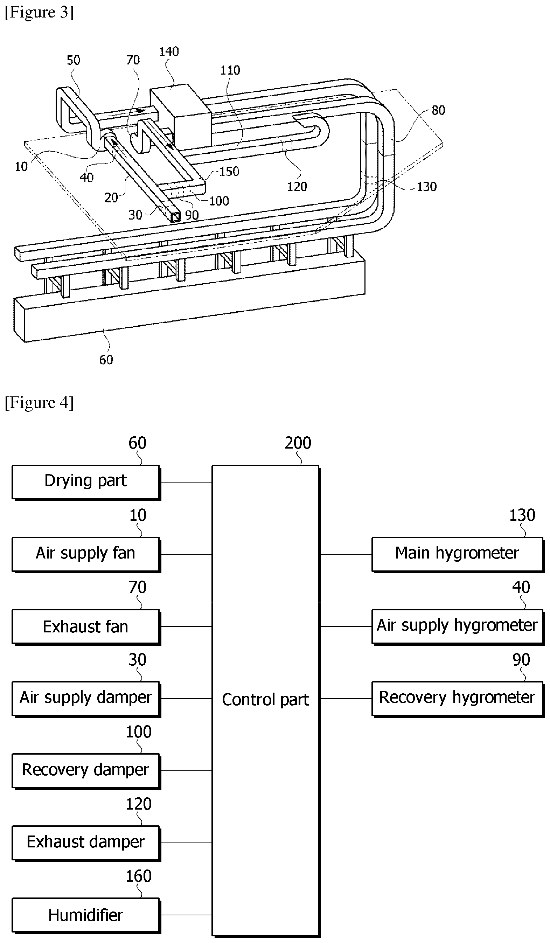

Figure 3 is a diagram exemplarily showing an electrode drying device according to one example of the present invention.

As shown in Figure 3, the electrode drying device of the present application is a device drying a coating layer formed by applying a coating liquid on a current collector, which may comprise an air supply fan (10), a first air supply duct (20), and a second air supply duct (50). When the air supply fan (10) operates, outside air may flow into the first air supply duct (20), and the outside air passing through the air supply fan (10) may be supplied to a drying part (60).

Here, the drying part (60) may be a drying oven having a drying space, and the drying part may be located indoors. That is, the air supply fan (10) and the first air supply duct (20) may be located outdoors, particularly on the roof, and a part of the second air supply duct (50) may be located outdoors and the remaining part may extend indoors to be connected to the drying part (60).

In this example, an air supply hygrometer (40) may be provided in the first supply air duct (20). An air supply amount may be controlled by sensing the humidity of the supplied air. That is, the air supply amount of outside air may be controlled. For control of the air supply amount of outside air, an air supply damper (30) may be provided in the first air supply duct (20).

When outside air with appropriate humidity is detected by the air supply hygrometer (40), the air supply amount may be increased, and when the humidity is low, the air supply amount may be reduced. That is, the air supply amount may be varied by adjusting the opening degree of the air supply damper (30).

The outside air means air in an atmospheric state, which may have constant absolute humidity depending on the weather. Specifically, the outside air may have absolute humidity of 3 g/m³ to 50 g/m³, 4 g/m³ to 40 g/m³, or 5 g/m³ to 30 g/m³ as measured by the air supply hygrometer.

In a general drying process, the air supplied to the drying part (60) is exhausted by absorbing moisture therefrom. However, in this example, the air supplied to the drying part (60) is for properly maintaining the absolute humidity amount. Therefore, according to the present example, preferably, a main hygrometer (130) is provided for sensing the absolute humidity of the air supplied to the drying part (60).

The main hygrometer (130) may be provided in the second air supply duct (50). In particular, the main hygrometer (130) may be provided at a portion where the drying part (60) and the second air supply duct (50) are connected. That is, preferably, the main hygrometer (130) is provided to sense the absolute humidity immediately before supplying air to the drying part (60). Therefore, preferably, the main hygrometer (130) is provided indoors.

This example may comprise an exhaust fan (70). More specifically, the exhaust fan (70) may be provided to exhaust the air used in the drying process from the drying part (60). A first exhaust duct (80) may be provided between the exhaust fan (70) and the drying part (60). A part of the first exhaust duct (80) may be provided indoors and the remaining part may be provided outdoors to be connected to the exhaust fan (70). Of course, the exhaust fan (70) may also be provided outdoors.

The exhaust fan (70) is connected to a second exhaust duct (110) to exhaust the air used in the drying process to the outside through an external exhaust port.

In general, the entire air sucked into the exhaust fan (70) is exhausted to the outside through the second exhaust duct (110). This is because it is common knowledge that since the air used in the drying process contains a lot of moisture, when it is supplied to the drying part (60) again, the drying efficiency is lowered That is, this is because it is common sense that the drying efficiency is increased by supplying high-temperature dry air to the drying part (60) and discharging hot and humid air after drying.

However, in the present example, the drying process is performed in a state where an appropriate absolute humidity is maintained, whereby it is possible to fundamentally solve problems of cracks and side rings. Therefore, in the present example, the exhaust fan (70) may be referred to as a means for recovering moisture from hot and humid air rather than a means for completely discharging the air. That is, it may be referred to as a means for recovering and resupplying moisture. Therefore, in this example, the exhaust fan (70) may be referred to as a recovery exhaust fan (70).

An exhaust damper (120) may be provided in the second exhaust duct (110). The exhaust amount may be controlled by adjusting the opening and closing amount of the exhaust damper (120). Preferably, the control of the exhaust damper (120) is interlocked with control of a recovery damper (90) to be described below.

A recovery duct (150) branched from the second exhaust duct (110) may be provided. The recovery duct (150) may be connected to the first air supply duct (20). That is, a portion of the exhausted air may flow into the recovery duct (150) and then be resupplied to the drying part (60) through the first air supply duct (20). At this time, it can be said that moisture is recovered from the exhausted air, which is recycled.

A recovery damper (90) may be provided in the recovery duct (150). The amount of the recovered air may be adjusted by adjusting the opening of the recovery damper (90).

The amount of the supplied air and the amount of the exhausted air must be balanced based on the drying part (60). From another point of view, the differential pressure before and after the air supply fan (10) and the differential pressure before and after the recovery exhaust fan (70) must be properly maintained.

Therefore, from the viewpoint of the air supply, preferably, the opening rates of the air supply damper (30) and the recovery damper (90) are controlled to be interlocked to each other. In addition, from the viewpoint of the exhaust air, preferably, the opening rates of the exhaust damper (120) and the recovery damper (90) are controlled to be interlocked to each other.

In this example, the recovery damper (90) may be actively controlled. The air introduced into the second exhaust duct (110) is very humid air. Therefore, it is possible to recover moisture, which may actively recover moisture from the air exhausted through the recovery duct (150) to resupply it.

To this end, a recovery hygrometer (100) may be provided in the recovery duct (150). The absolute humidity in the recovered air may be sensed through the recovery hygrometer (100). Then, it is possible to actively recover moisture by increasing the opening amount of the recovery damper (90). Since the occurrence possibility of over-drying during the initial drying process is small, it is preferable that the exhaust amount is greater than the recovery amount. However, since the occurrence possibility of over-drying during the full-scale drying process is high, it is preferable that the recovery amount is greater than the exhaust amount. That is, it is preferable to perform the drying in a state where the absolute humidity is appropriately maintained by actively recovering the moisture.

In other words, in the initial setting step of the drying device, the inside of the drying space may be heated by controlling the amount of the recovered air to be relatively small, and in the full-scale drying process through the drying device, the required absolute humidity may be matched by controlling the amount of the recovered air to be relatively large.

It is preferable that the opening of the exhaust damper (120) relatively decreases as the opening of the recovery damper (90) increases. Conversely, it is preferable that the opening of the exhaust damper (120) increases as the opening of the recovery damper (90) decreases.

Meanwhile, it is preferable that the opening of the air supply damper (30) relatively decreases as the opening of the recovery damper (90) increases. Conversely, it is preferable that the opening of the air supply damper (30) increases as the opening of the recovery damper decreases.

Here, the outside air and the recovered air are supplied to the drying part (60) together, where it can be known that the ratio of the outside air and the recovered air varies depending on the opening of the recovery damper (90) and the air supply damper (20). That is, the mixed air is directly supplied to the drying part (60), where the absolute humidity of the mixed air is very important. When the absolute humidity of the recovered air is higher than the absolute humidity of the outside air, and when it is necessary to increase the required absolute humidity, the ratio of the recovered air may be controlled to be higher than the ratio of the outside air. That is, preferably, the opening of the recovery damper is controlled to increase and the opening of the air supply damper is controlled to decrease. Similarly, when the opening of the recovery damper increases, the opening of the exhaust damper is preferably controlled to decrease.

As the outside air has the above-described absolute humidity, the opening amounts of the air supply damper and the recovery damper may be differently controlled based on the absolute humidity measured by the air supply hygrometer to be described below. Through this, the electrode drying device can reduce the consumption and installation costs generated upon electrode drying, and reduce the crack generation rate on the electrode surface by reducing the drying deviation in the width direction. In this specification, the term "set value" means an absolute humidity value set so that the moisture inside the drying part has excellent absolute humidity.

The air supply damper (30) is a device adjusting the amount of the outside air supplied along the first air supply duct, which is provided inside the first air supply duct. As the air supply damper adjusts the amount of the outside air supplied from the above-mentioned position, it is possible to control the drying rate of the coating liquid coated on the current collector, and as a result, it is possible to control the adhesive force between the current collector and the coating layer. In addition, as the air supply damper adjusts the amount of the outside air supplied at the above-mentioned position, the differential pressure between the outside air flowing into the drying part, that is, the supply air and the moisture discharged from the drying part, that is, the exhaust air is controlled, whereby it is possible to control the absolute drying amount of the coating liquid coated on the current collector.

In one example, the outside air may have constant absolute humidity depending on the season, so that the opening rate of the air supply damper is not particularly limited, which may be, for example, more than 0% to 100%. The air supply damper may have constant absolute humidity in the entire range of the above-described opening rates. Therefore, the opening rate of the air supply damper may be set differently depending on the season when the drying device is initially driven.

The air supply hygrometer (40) is a sensor measuring the absolute humidity of the outside air supplied to the first air supply duct (20), which is provided inside the first air supply duct. As the air supply hygrometer is provided at the above-described position, it may be possible to measure the absolute humidity of the outside air supplied to the first supply air duct. The absolute humidity of the air introduced from the recovery duct may be low when the drying device is initially driven. Therefore, at the beginning, the opening rate of the air supply damper (30) may be set and controlled higher than the opening rate of the recovery damper based on the sensing result of the air supply hygrometer (40).

In the electrode, the current collector is an element having a low electrical resistance and configured so that a current is transferred to the active material or a current is transferred from the active material during charging and discharging. As the current collector, any negative electrode current collector having conductivity without causing chemical changes to a battery in the relevant technical field may be used, which is not particularly limited. For example, copper, stainless steel, aluminum, nickel, titanium, baked carbon, or those, in which an aluminum or stainless-steel surface is surface-treated with carbon, nickel, titanium, silver, and the like, may be used as the negative electrode current collector.

The coating layer is a layer formed by applying a coating liquid on the current collector, specifically, on one or both sides of the current collector. As the coating liquid, any negative electrode slurry forming a negative electrode in the relevant technical field may be used, which is not particularly limited. For example, the negative electrode slurry may comprise a negative electrode active material, a conductive material, a binder, and a solvent.

As the negative electrode active material, any negative electrode active material used in the relevant technical field may be used, which is not particularly limited. For example, the negative electrode active material may be at least one of a carbon-based active material and a silicon-based active material.

As the carbon-based active material, one or more selected from the group consisting of artificial graphite, natural graphite, graphitized carbon fiber, and graphitized mesocarbon microbeads may be used. As the silicon-based active material, one or more selected from the group consisting of SiOx (0≤X<2), a Si-C complex and a Si-Y alloy (where Y is an element selected from the group consisting of an alkali metal, an alkaline earth metal, a transition metal, a group 13 element, a group 14 element, a rare earth element, and a combination thereof) may be used.

The conductive material may be any conductive material having conductivity without causing chemical change in the battery in the relevant technical field, which is not particularly limited. For example, as the conductive material, graphite such as natural graphite and artificial graphite; carbon black such as carbon black, acetylene black, ketjen black, channel black, furnace black, lamp black, or thermal black; conductive fibers such as carbon fibers and metal fibers; conductive tubes such as carbon nanotubes; fluorocarbon; metal powders of aluminum or nickel, and the like; conductive whiskers such as zinc oxide or potassium titanate; conductive metal oxide such as titanium oxide; or conductive materials such as polyphenylene derivatives, and the like may be used.

The binder is used to secure adhesive force between the negative active materials or between the negative active material and the current collector, where all binders used in the relevant technical field may be used, and are not particularly limited. For example, the binder may include polyvinylidene fluoride, a polyvinylidene fluoride-hexafluoropropylene copolymer (PVDF-co-HFP), polyvinyl alcohol, polyacrylonitrile, starch, hydroxypropylcellulose, regenerated cellulose, polyvinylpyrrolidone, polytetrafluoroethylene, polyethylene, polypropylene, an ethylene-propylene-diene polymer (EPDM), a sulfonated-EPDM, carboxymethyl cellulose (CMC), styrene butadiene rubber (SBR), fluororubber, or various copolymers thereof, and the like, and any one or a mixture of two or more thereof may be used.

The solvent may include, for example, water; amide-based polar organic solvents such as dimethylformamide (DMF), diethyl formamide, dimethyl acetamide (DMAc), and N-methyl pyrrolidone (NMP); alcohols such as methanol, ethanol, 1-propanol, 2-propanol (isopropyl alcohol), 1-butanol (n-butanol), 2-methyl-1-propanol (isobutanol), 2-butanol (sec-butanol), 1-methyl-2-propanol (tert-butanol), pentanol, hexanol, heptanol, and octanol; glycols such as ethylene glycol, diethylene glycol, triethylene glycol, propylene glycol, 1,3-propanediol, 1,3-butanediol, 1,5-pentanediol, and hexylene glycol; polyhydric alcohols such as glycerin, trimethylolpropane, pentaerythritol or sorbitol; glycol ethers such as ethylene glycol monomethyl ether, diethylene glycol monomethyl ether, triethylene glycol monomethyl ether, tetraethylene glycol monomethyl ether, ethylene glycol monoethyl ether, diethylene glycol monoethyl ether, triethylene glycol monoethyl ether, tetraethylene glycol monoethyl ether, ethylene glycol monobutyl ether, diethylene glycol monobutyl ether, triethylene glycol monobutyl ether, and tetraethylene glycol monobutyl ether; ketones such as acetone, methyl ethyl ketone, methyl propyl ketone, and cyclopentanone; or esters such as ethyl acetate, γ-butyl lactone, and ε-propiolactone, and the like, and any one or a mixture of two or more thereof may be used.

In one example, the coating liquid may have a solid content of 50% to 70%. Specifically, the solids content of the coating liquid may be 53% to 68%, 55% to 65%, or 58% to 63%. As the coating liquid has the above-described solid content, it exhibits high loading that less moisture evaporates during drying, and the remaining solid content is coated on the current collector, whereby it is possible to have excellent capacity and charging time.

In addition, the coating layer may be controlled so that the loading amount is relatively greater in the center portion than in the side portion as a sliding section in the form of a slope is generated on the side portion by the flow of liquid. As a result, the thickness of the coating layer on the entire surface of the coating layer may be controlled to be the same.

In one example, the electrode drying device may further comprise a heat exchanger (140). The heat exchanger is a device for increasing the temperature of the air moving in the second air supply duct (50) through heat exchange between the air moving in the second air supply duct (50) and the air moving in the first exhaust duct (80). For example, as the heat exchanger, a plate type heat exchanger commercially available in the industry may be used.

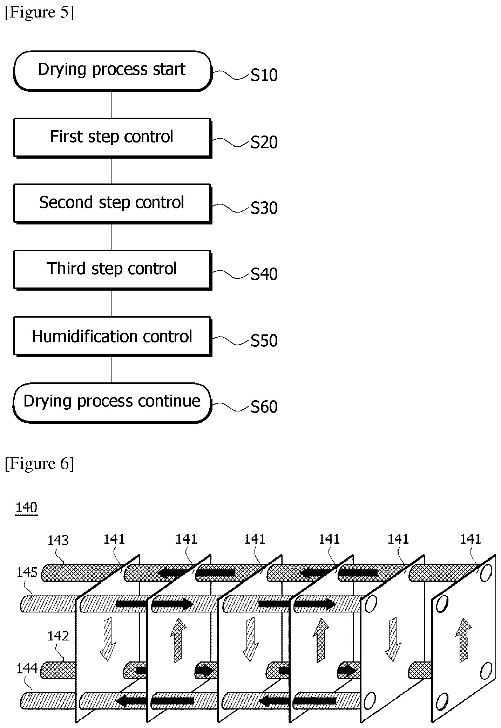

Figure 6 is a diagram exemplarily showing the inside of a heat exchanger according to one example of the present application.

As shown in Figure 6, the heat exchanger (140) may comprise a plurality of hot plates (141) disposed at spaced intervals from each other, a first lower pipe (142) communicating with first side surface lower ends of the plurality of hot plates, a first upper pipe (143) communicating with first side surface upper ends of the plurality of hot plates, a second upper pipe (145) communicating with second side surface upper ends of the plurality of hot plates, and a second lower pipe (144) communicating with second side surface lower ends of the plurality of hot plates.

Specifically, the air moving through the second air supply duct (50) is introduced into the first lower pipe and moved, and the air moving through the first exhaust duct is introduced into the second upper pipe and moved. At this time, the airs are moved between the plurality of heat plates, respectively, to exchange heat.

The air provided with the heat may be moved to the first upper pipe, and the air moved to the first upper pipe may be discharged from the first upper pipe to be introduced into the second air supply duct (50) again. In addition, the air in which the heat is provided may be moved to the second lower pipe, and the air moved to the second lower pipe may be discharged from the second lower pipe to be introduced into the exhaust duct again.

Through this, the hot air passing through the heat exchanger may be introduced into the drying part, whereby it is possible to dry the coating layer formed by applying the coating liquid on the current collector.

In another example, the drying part (60) may further comprise a thermal medium oil pipe therein. The thermal medium oil is a high-temperature oil, which may be moved along the thermal medium oil pipe. For example, as the thermal medium oil pipe, a commercially available thermal medium oil pipe may be used, and hot air may be formed by heating the outside air by a method known in the industry. As the drying part further comprises the above-described thermal medium oil pipe therein, the outside air moving through the second air supply duct may be heated to form hot air and introduced into the drying part, and as a result, the coating layer formed by applying the coating liquid on the current collector may be dried.

At this time, the set temperature of the electrode drying device for forming hot air by the heat exchanger and/or the thermal medium oil pipe may be 50°C to 165°C, specifically, 65°C to 150°C, 80°C to 135°C, or 95°C to 120°C. As the set temperature of the electrode drying device as described above satisfies the above-described range, the moisture evaporated upon drying the coating layer formed by applying the coating liquid on the current collector may have excellent absolute humidity.

In another example, the drying part may further comprise a mid-infrared (MIR) drying device therein. Specifically, when the hot air introduced into the drying part does not have the above-described set temperature, the drying part may perform direct heating through the mid-infrared drying device to increase the temperature of the hot air to the above-described set temperature.

Hereinafter, with reference to Figures 4 and 5, the control configuration and control method according to one example of the present invention will be described in detail.

The control part (200) is a controller provided to control the operation of the drying device, which may be particularly a constitution for controlling the drying environment.

The drying part (60) is a space heating the electrode, wherein the heat quantity for heating heat may be continuously controlled through the control part (200).

The control part (200) may control the operation of various fans (10, 70) and various dampers (30, 100, 120). The control of such constitutions may be performed based on the absolute humidity detected by various hygrometers (130, 40, 90).

Specifically, the control part (200) may control the opening degrees of the air supply damper (30), the recovery damper (100), and the exhaust damper (120) based on the absolute humidity detected by the main hygrometer (130), the air supply hygrometer (40), and the recovery hygrometer (90).

The control part (200) may ultimately control the operation of various dampers in order to supply an optimal absolute humidity environment to the drying space. That is, the absolute humidity of the air supplied to the drying space may be controlled to be optimal. Therefore, the most important control factor may be the absolute humidity sensed by the main hygrometer (130).

However, it is preferable to create an absolute humidity environment step by step at the beginning of operation of the drying device or according to seasonal fluctuations.

That is, when the operation of the drying device starts (S10), the first step control (S20) is performed, and in this case, the control factor is the absolute humidity sensed by the air supply hygrometer (40). According to the required absolute humidity, the control part (200) primarily adjusts the opening degrees of various dampers (30, 100, 120). The first step control may be referred to as a step for reflecting the absolute humidity of the outside air.

After the first step control (S20) ends, the second step control (S30) may be performed. In this case, the control factor is the absolute humidity sensed by the recovery hygrometer (90). According to the required absolute humidity, the control part (200) secondarily adjusts the opening degrees of various dampers (30, 100, 120). The second step control may be referred to as a step for reflecting the absolute humidity of the recovered air.

After the second step control (S20) ends, the third step control (S40) may be performed. In this case, the control factor is the absolute humidity sensed by the main hygrometer (130). According to the required absolute humidity, the control part (200) finally adjusts the opening degrees of various dampers (30, 100, 120). That is, ultimately, the final control of the dampers is to sense the absolute humidity required by the main hygrometer (130) so that the dry environment becomes an optimal absolute humidity environment.

The third step control (S40) may be continuously performed, which may dry the electrode effectively and stably (S60).

Meanwhile, when the loading amount is large, it may be difficult to provide a sufficient absolute humidity environment through the third step control (S40). In this case, the humidification control (S50) may be performed. When it is difficult to create the required absolute humidity environment even if the recovered moisture is used to the maximum, the moisture may be supplied additionally.

The humidification control (S50) may be performed intermittently, and the humidification control (S50) and the third step control (S40) may be repeatedly performed by reflecting the absolute humidity sensed by the main hygrometer (130). The drying process may continue through such steps (S60).

The humidifier (160) may perform a filter function as well as a humidifying function. Since foreign substances may be contained in the recovered air, the filtered air may be resupplied through the filter function.

### Industrial Applicability

It is described in the Detailed Description of Invention.

## Claims

1. An electrode drying device comprising:
an air supply fan provided to supply air through an air supply duct to a drying space in which an electrode coated with a coating liquid on a current collector is dried;
an exhaust fan provided to exhaust air from the drying space through an exhaust duct;
a recovery duct supplying the air discharged from the exhaust fan to the air supply fan;
a recovery damper adjusting the amount of the air introduced into the recovery duct;
a main hygrometer sensing the absolute humidity of the air supplied to the drying space; and
a control part adjusting an opening degree of the recovery damper according to the absolute humidity sensed by the main hygrometer in order to adjust the absolute humidity of the air introduced into the drying space.

2. The electrode drying device according to claim 1, wherein
the exhaust duct comprises a first exhaust duct connecting the drying space and the exhaust fan, and a second exhaust duct connecting the exhaust fan and an external exhaust port.

3. The electrode drying device according to claim 2, wherein
the air supply duct comprises a first air supply duct connecting an external air supply port and the air supply fan, and a second air supply duct connecting the air supply fan and the drying space.

4. The electrode drying device according to claim 3, wherein
the recovery duct is branched from the second exhaust duct to be connected to the first air supply duct.

5. The electrode drying device according to claim 4, wherein
an exhaust damper adjusting the amount of the air exhausted to the external exhaust port is provided in the second exhaust duct.

6. The electrode drying device according to claim 5, wherein
the exhaust damper is provided at the rear end of the branch point of the recovery duct.

7. The electrode drying device according to claim 6, wherein
a recovery hygrometer sensing the absolute humidity of the air introduced into the first air supply duct through the recovery duct is provided in the recovery duct.

8. The electrode drying device according to claim 7, wherein
the control part adjusts an opening degree of the recovery damper according to the absolute humidity sensed by the recovery hygrometer.

9. The electrode drying device according to claim 8, wherein
the control part adjusts the opening degree of the exhaust damper to decrease as the opening degree of the recovery damper increases.

10. The electrode drying device according to claim 4, wherein
an air supply damper adjusting the amount of the air introduced from the external air supply port is provided in the first air supply duct.

11. The electrode drying device according to claim 10, wherein
the air supply damper is provided at the front end of the junction point of the recovery duct.

12. The electrode drying device according to claim 11, wherein
an air supply hygrometer sensing the absolute humidity of the air introduced from the recovery duct and the external air supply port is provided in the first air supply duct.

13. The electrode drying device according to claim 12, wherein
the control part adjusts opening degrees of the recovery damper and the air supply damper according to the absolute humidity sensed by the air supply hygrometer.

14. The electrode drying device according to claim 13, further comprising:
a humidifier provided in the recovery duct.

15. The electrode drying device according to claim 14, wherein
the control part controls the humidification to be performed through the humidifier when the absolute humidity sensed by the main hygrometer is lower than a predetermined value.

16. The electrode drying device according to claim 4, further comprising:
a heat exchanger, in which heat exchange between the air introduced from the second air supply duct and the air discharged from the first exhaust duct is performed.

17. The electrode drying device according to claim 1, wherein
the coating liquid is a negative electrode slurry comprising a negative electrode active material, a conductive material, a binder, and a solvent, which has a solid content of 50% to 70%.

18. An electrode drying device comprising:
an air supply fan provided to supply air through an air supply duct to a drying space in which an electrode coated with a coating liquid on a current collector is dried;
an exhaust fan provided to exhaust air from the drying space through an exhaust duct;
a recovery duct supplying the air discharged from the exhaust fan to the air supply fan;
a recovery damper adjusting the amount of the air introduced into the recovery duct;
an exhaust damper adjusting the amount of the air exhausted to an external exhaust port through the exhaust duct;
an air supply damper adjusting the amount of the air introduced from an external air supply port through the air supply duct;
a main hygrometer sensing the absolute humidity of the air supplied to the drying space;
a recovery hygrometer sensing the absolute humidity of the air introduced into the recovery duct;
an air supply hygrometer sensing the absolute humidity of the air introduced from the recovery duct and the external air supply port; and
a control part adjusting an opening degree of the recovery damper according to the absolute humidity sensed by the main hygrometer in order to adjust the absolute humidity of the air introduced into the drying space.

19. The electrode drying device according to claim 18, wherein
the control part performs:
a first step damper control adjusting the opening degrees of the air supply damper, the exhaust damper, and the recovery damper according to the absolute humidity sensed by the air supply hygrometer;
a second step damper control adjusting the opening degrees of the air supply damper, the exhaust damper, and the recovery damper according to the absolute humidity sensed by the recovery hygrometer; and
a third step damper control adjusting the opening degrees of the air supply damper, the exhaust damper, and the recovery damper according to the absolute humidity sensed by the main hygrometer sequentially.

20. The electrode drying device according to claim 19, wherein
the control part performs a humidification control controlling operation of the humidi fier provided in the recovery duct after the third step damper control.

21. An electrode drying method comprising:
supplying air through an air supply duct to a drying space in which an electrode coated with a coating liquid on a current collector is dried;
exhausting air from the drying space through an exhaust duct;
resupplying at least a part of the discharged air to the drying space through a recovery duct;
adjusting the absolute humidity of the air introduced into the drying space, comprisin g:
adjusting opening of an air supply damper which adjusts an amount of air introduced from an external air supply port through the air supply duct, an exhaust damper which adjusts an amount of air exhausted to an external exhaust port through the exhaust duct, and a recovery damper which adjusts an amount of air introduced into the recovery duct, according to the absolute humidity of the air introduced from the recovery duct and the external air supply port;
adjusting the opening of the air supply damper, the exhaust damper, and the reco very damper according to the absolute humidity of the air introduced into the recovery duct; and
adjusting the opening degrees of the air supply damper, the exhaust damper, and t he recovery damper according to the absolute humidity of the air supplied to the drying space.
